# EUROPEAN PATENT APPLICATION

(11) **EP 4 848 348 A1**
(43) Date of publication of application: **02.12.2026**
(21) Application number: 25744478.6
(22) Date of filing: 14.01.2025
(51) Int. Cl.: H01M 4/13, H01M 50/533, H01M 10/0587, H01M 10/0525

(54) **ELECTRODE SHEET, ELECTRODE ASSEMBLY AND BATTERY**

(30) Priority: 26.01.2024 CN 202410111468
(71) Applicant: Ningde Amperex Technology Limited, Ningde, Fujian 352100 (CN)
(72) Inventor: LI, Xiaolong, Ningde, Fujian 352100 (CN); LIU, Wei, Ningde, Fujian 352100 (CN)
(74) Representative: Dehns Germany Partnerschaft mbB
(86) International application number: PCT/CN2025/072241
(87) International publication number: WO 2025/157035

(57) **Abstract**

This application discloses an electrode plate, an electrode assembly, and a battery. A surface, facing away from the current collector, of the active material layer includes a protrusion region, at least one tab region, and an end clearance region. The electrode plate includes a plurality of first protruding portions distributed in the protrusion region. The plurality of first protruding portions protrude toward the same side of the electrode plate in a thickness direction of the electrode plate. The end clearance region is provided at an end of the protrusion region in a length direction of the electrode plate and extends to an edge of the electrode plate. The tab region extends to the edge of the electrode plate in a width direction of the electrode plate. The tab assembly is disposed in the tab region, and is spaced apart from the protrusion region. By disposing the protrusion region, the tab region, and the end clearance region of the electrode plate in combination, this application effectively alleviates the interface problem caused by squeezing between electrode layers, and improves the cycle performance of the battery.

## Description

### TECHNICAL FIELD

This application relates to the technical field of electrochemical devices, and in particular, to an electrode plate, an electrode assembly, and a battery.

### BACKGROUND

Cycle life is a key performance metric of lithium-ion batteries. Increasing the cycle life is an ongoing long-term research and development topic. The cycle life can be improved effectively not only by optimizing and innovating battery materials, but also through structural design and improvement, thereby imposing more design requirements on the winding method of an electrode assembly of a battery cell.

### SUMMARY

The applicant finds that the layers of an electrode assembly squeeze each other, including squeezing at a corner part and a straight part of the electrode assembly. Especially, during the charging and discharging of the battery, the electrode assembly expands, and the squeezing is further aggravated, thereby resulting in insufficient electrolyte solution and poor infiltration between the layers, and being prone to interface deterioration and even abnormalities such as poor infiltration and cycle failure.

An embodiment of this application provides an electrode plate, an electrode assembly, and a battery to solve the problem of squeezing between the layers of the electrode assembly.

According to a first aspect, an embodiment of this application provides an electrode plate. The electrode plate includes a current collector and an active material layer disposed on a surface of the current collector. A surface, facing away from the current collector, of the active material layer includes a protrusion region, and an end clearance region. The electrode plate includes a plurality of first protruding portions distributed in the protrusion region. The plurality of first protruding portions protrude toward a same side of the electrode plate in a thickness direction of the electrode plate. The end clearance region is provided at an end of the protrusion region in a length direction of the electrode plate and extends to an edge of the electrode plate. In the width direction of the electrode plate, a shortest distance between the protrusion region and an edge of the active material layer is T1, and T1 satisfies: 0.5 mm ≤ T1 ≤ 30 mm.

In some exemplary embodiments, the surface, facing away from the current collector, of the active material layer includes at least one tab region. The tab region extends to the edge of the electrode plate in the width direction of the electrode plate. The tab region is configured to allow arrangement of a tab assembly. The tab assembly is spaced apart from the protrusion region.

In some exemplary embodiments, the current collector includes a coating portion and a blank foil portion. The active material layer is disposed on a surface of the coating portion. The blank foil portion is disposed outside the blank foil portion in the length direction of the electrode plate.

In some exemplary embodiments, the end clearance region includes a head clearance region and a tail clearance region. In the length direction of the electrode plate, the head clearance region is provided at one end of the protrusion region, and the tail clearance region is provided at another end of the protrusion region. The electrode plate is configured to be wound together with a separator from the head clearance region along the length direction of the electrode plate to form a flat electrode body.

In some exemplary embodiments, in the length direction of the electrode plate, a dimension of the head clearance region is A, and a dimension of the tail clearance region is D, A satisfies: 30 mm ≤ A ≤ 1000 mm, and D satisfies: 30 mm ≤ D ≤ 1000 mm.

In some exemplary embodiments, in the length direction of the electrode plate, a dimension of the head clearance region is A, and a dimension of the tail clearance region is D, A satisfies: 60 mm ≤ A ≤ 500 mm, and D satisfies: 100 mm ≤ D ≤ 500 mm.

In some exemplary embodiments, T1 satisfies: 1 mm ≤ T1 ≤ 30 mm.

In some exemplary embodiments, T1 satisfies: 3 mm ≤ T1 ≤ 30 mm.

In some exemplary embodiments, T1 satisfies: 3 mm ≤ T1 ≤ 20 mm.

In some exemplary embodiments, in the width direction of the electrode plate, the surface, facing away from the current collector, of the active material layer includes a first region connected to one side of the protrusion region and a second region connected to another side of the protrusion region; the first region extends to the edge of the active material layer along a direction facing away from the second region; and the second region extends to the edge of the active material layer along a direction facing away from the first region. T11 is defined as a width of the first region in the width direction of the electrode plate, T12 is defined as a width of the second region in the width direction of the electrode plate, a difference between T11 (the width of the first region in the width direction of the electrode plate) and T12 (the width of the second region in the width direction of the electrode plate) is △T1, △T1 = |T11 - T12|, and △T1 satisfies: 0 mm ≤ △T1 ≤ 29.5 mm.

In some exemplary embodiments, a spacing between the tab assembly and the protrusion region is T2, and T2 satisfies: 0.5 mm ≤ T2 ≤ 30 mm. The tab assembly includes a tab; and/or the tab assembly includes a protection adhesive.

In some exemplary embodiments, the number of the tab regions is one, and the tab region extends along the length direction of the electrode plate to connect to the end clearance region.

In some exemplary embodiments, in the width direction of the electrode plate, the surface, facing away from the current collector, of the active material layer includes a first region connected to one side of the protrusion region. The first region is located on one side, facing away from the tab region, of the protrusion region, and extends to the edge of the electrode plate. A width of the tab region in the width direction of the electrode plate is W1, and W1 satisfies: 2 mm ≤ W1 ≤ 40 mm.

In some exemplary embodiments, both the number of the tab regions and the number of the protrusion regions are plural. In the length direction of the electrode plate, one tab region is provided between two adjacent protrusion regions. Each tab region runs through the electrode plate along the width direction of the electrode plate.

In some exemplary embodiments, the protrusion region includes at least one clearance opening region. Each clearance opening region extends along the width direction of the electrode plate to the edge of the electrode plate to form the tab region. A plurality of the clearance opening regions extend toward a same edge of the electrode plate in the width direction of the electrode plate.

In some exemplary embodiments, a dimension of the tab region in the length direction of the electrode plate is W3, and W3 satisfies: 10 mm ≤ W3 ≤ 50 mm.

In some exemplary embodiments, the electrode plate is configured to be wound together with a separator for a plurality of turns along the length direction of the electrode plate to form an electrode body. Each turn of the electrode plate includes a straight part and corner parts disposed at two ends of the straight portion respectively. The tab region is disposed in the straight portion. In the length direction of the electrode plate, a dimension of each of the corner portions is W5, and a dimension of the protrusion region is W6.

The protrusion region is provided at the corner portion, where W6 = W5; or, the protrusion region is provided at the corner part and extends to the straight part, and the two protrusion regions of the same turn of the electrode plate are spaced apart, where W6 > W5.

In some exemplary embodiments, W5 satisfies: 0.5 mm ≤ W5 ≤ 20 mm; and/or W6 satisfies: 0.5 mm ≤ W6 ≤ 100 mm.

In some exemplary embodiments, dimensions W6 of all the protrusion regions in the length direction of the electrode plate are equal; or, from an inner turn to an outer turn of the electrode body, the dimension W6 of the protrusion region in the length direction of the electrode plate gradually increases.

In some exemplary embodiments, the electrode plate is configured to be wound together with a separator for a plurality of turns along the length direction of the electrode plate to form an electrode body. Each turn of the electrode plate includes a straight part and corner parts disposed at two ends of the straight portion respectively. The tab region is disposed in the straight portion. A height of the first protruding portion disposed at the corner part is h1, and h1 satisfies: 55 µm ≤ h1 ≤ 70 µm. A height of the first protruding portion disposed at the straight part is h2, and h2 satisfies: 10 µm ≤ h2 ≤ 18 µm.

In some exemplary embodiments, the electrode plate is configured to be wound together with a separator for a plurality of turns along the length direction of the electrode plate to form an electrode body. The plurality of first protruding portions on each turn of the electrode plate protrude toward a winding center of the electrode body in the thickness direction of the electrode plate.

In some exemplary embodiments, outer contours of the first protruding portions are circular, elliptical, or regular polygonal; or, outer contour dimensions of the first protruding portions are equal; or, in the width direction of the electrode plate, outer contour dimensions of the first protruding portions gradually decrease from a central region to an edge region of the protrusion region; or, in the length direction of the electrode plate, outer contour dimensions of the first protruding portions gradually decrease from a central region to an edge region of the protrusion region.

According to a second aspect, this application provides an electrode assembly. The electrode assembly includes a plurality of tab assemblies, the electrode plate disclosed above, and a separator disposed between two electrode plates. The separator and the two electrode plates are wound along the length direction of the electrode plate to form a flat electrode body.

In some exemplary embodiments, the tab assembly includes a tab. The tab is provided in the tab region of the electrode plate. The tab includes a connecting section connected to the electrode plate and a mating section extending beyond the edge of the electrode plate. A plurality of second protruding portions are disposed protrusively on a surface, facing away from the electrode plate, of the connecting section.

According to a third aspect, this application provides a battery. The battery includes a shell and the electrode assembly disclosed above. The electrode assembly is disposed in an inner space of the shell.

In the electrode plate, electrode assembly, and battery according to some embodiments of this application, the end clearance region can provide a winding buffer region for the winding of the electrode body, thereby improving the winding stability of the electrode body, and reducing the probability of winding instability caused by the arrangement in which the region with the first protruding portion is a winding start point or a winding termination point. In conjunction with the tab region, the arrangement hereof can prevent the expansion of a middle layer of the electrode body, the middle layer is fitted with the tab assembly, and the expansion drives the tab assembly to squeeze the electrode body. The arrangement hereof reduces the damage caused by the tab assembly to the electrode body. The tab region extends to the edge of the electrode plate. Due to the presence of the first protruding portion, the supporting effect exerted by the first protruding portion can be extended to the tab region, so that the tab region of the electrode plate is not prone to be squeezed. In addition, a part of the region can be reserved for accommodating the electrolyte solution, thereby improving the electrolyte infiltration effect. Therefore, with the protrusion region, the tab region, and the end clearance region of the electrode plate disposed in combination, the electrode assembly according to an embodiment of this application not only alleviates the interface problem caused by squeezing between electrode layers, and when the electrode assembly is applied to a battery, effectively improves the cycle performance of the battery.

### BRIEF DESCRIPTION OF DRAWINGS

To describe the technical solutions in some embodiments of this application or the prior art more clearly, the following outlines the drawings to be used in the description of some embodiments of this application or the prior art. Evidently, the drawings outlined below are merely a part of embodiments of this application. A person skilled in the art may derive other drawings from such drawings without making any creative effort.
FIG. 1 is a side view of a partial structure of an electrode body according to an embodiment of this application;
FIG. 2 is a schematic structural diagram of an unwound electrode plate with one tab region according to an embodiment of this application;
FIG. 3 is a schematic structural diagram of an unwound electrode plate with one tab region according to another embodiment of this application;
FIG. 4 is a schematic structural diagram of an unwound electrode plate with a tab region not running through a protrusion region according to an embodiment of this application;
FIG. 5 is a schematic structural diagram of an unwound electrode plate with a second protruding portion according to an embodiment of this application;
FIG. 6 is a schematic structural diagram of an unwound electrode plate with a tab region running through a protrusion region according to an embodiment of this application;
FIG. 7 is a schematic structural diagram of an unwound electrode plate in which widths of a plurality of protrusion regions are equal in a length direction of the electrode plate according to an embodiment of this application;
FIG. 8 is a schematic structural diagram of an unwound electrode plate in which widths of a plurality of protrusion regions increase gradually in a length direction of the electrode plate according to an embodiment of this application; and
FIG. 9 is a schematic structural diagram of an unwound electrode plate in which a dimension of a first protruding portion at a central region of a protrusion region is relatively large according to an embodiment of this application.

List of reference numerals:
20. electrode body; 21. straight part; 22. corner part; 100. tab; 110. second protruding portion; 200. protection adhesive; 40. tab assembly; 50. separator;
300. electrode plate; 310. protrusion region; 311. first protruding portion; 320. tab region; 330. end clearance region; 331. head clearance region; 332. tail clearance region; 341. first region; 342. second region; 3411. first edge; 3421. second edge; 3101. first boundary; 3102. second boundary; 301. positive electrode plate; 302. negative electrode plate;
X. length direction; Y. width direction; Z. thickness direction.

### DETAILED DESCRIPTION

To make the objectives, technical solutions, and advantages of this application clearer, the following describes this application in further detail with reference to drawings and embodiments. Understandably, the specific embodiments described herein are merely intended to explain this application, but are not intended to limit this application.

The applicant hereof finds that during the charging and discharging of a battery, the electrode assembly expands, and the squeezing is further aggravated at the corner part of the electrode assembly, thereby resulting in insufficient electrolyte solution and poor infiltration at the corner part, and being prone to interface deterioration or even cycle failure.

The applicant also finds that in a process of processing the electrode assembly, the positive electrode plate, the separator, and the negative electrode plate are stacked in sequence and wound for a plurality of turns to form an electrode body with a plurality of turns of jelly-roll units. By increasing the spacing between two adjacent turns of jelly-roll units and disposing supporting structures such as protrusions and adhesive tape to support the two adjacent jelly-roll units, this application can alleviate the squeezing caused by the expansion of the electrode assembly, but the effect of alleviation is still inferior. For example, when protrusion structures are disposed on the entire surface of the electrode plate to support the two adjacent turns of jelly-roll units, the interface problem of the electrode plate at the corner part is alleviated, but at the same time, new interface problems are brought to the straight part, and adverse effects such as insufficient electrolyte solution arise.

In view of this, some embodiments of this application provide an electrode assembly and a battery. For the infiltration problems and electrode interface problems at different positions and degrees, protrusions are distributed and designed at the target locations to effectively alleviate the infiltration and interface problems while alleviating the adverse effect on the normal interface part.

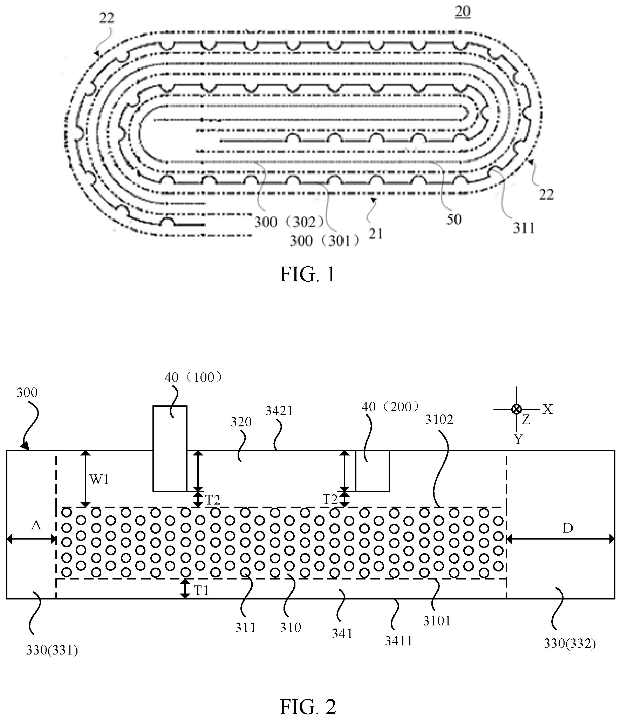

As shown in FIG. 1, the electrode assembly according to an embodiment of this application includes two electrode plates 300 with opposite polarities and a separator 50 disposed between the two electrode plates 300. As shown in FIG. 2, which is a schematic front view of a structure of one electrode plate 300 in an unwound state, the electrode plate 300 is defined by a length direction X, a width direction Y, and a thickness direction Z that are perpendicular to each other. The length direction X, width direction Y, and thickness direction Z are consistent between the two electrode plates 300 of opposite polarities. The separator 50 is disposed between the two electrode plates 300 of opposite polarities in the thickness direction Z of the electrode plate 300. Of the two electrode plates 300 of opposite polarities, one is a positive electrode plate 301, and the other is a negative electrode plate 302. The separator 50 is insulative, and is configured to separate the positive electrode plate 301 from the negative electrode plate 302 to prevent short-circuiting between the positive electrode plate 301 and the negative electrode plate 302.

In an embodiment of this application, the separator 50 and the two electrode plates 300 are wound for a plurality of turns along the length direction X of the electrode plate 300 to form an electrode body 20. The length direction X of the electrode plate is a direction in which the electrode plate is wound, and the width direction Y is perpendicular to the length direction X. The electrode body 20 is flat. Each turn of electrode plate 300 includes two straight parts 21 and two corner parts 22. The two straight parts 21 are connected between the two corner parts 22. The corner parts 22 of the two adjacent turns of electrode plate 300 are prone to squeeze each other. The straight part 21 and the corner part 22 of each turn of electrode plate 300 also squeeze each other. Therefore, the corner part 22 is a region most prone to squeezing in the electrode body 20. When the corner part 22 is squeezed, the problems such as insufficient electrolyte solution and poor infiltration are prone to occur, thereby deteriorating the interface of the electrode plate 300 at the corner part 22, or even resulting in cycle failure.

In an embodiment of this application, at least one of the two electrode plates 300 includes a protrusion region 310. The electrode plate 300 includes a plurality of first protruding portions 311 distributed in the protrusion region 310. The plurality of first protruding portions 311 protrude toward the same side of the electrode plate 300 in the thickness direction Z of the electrode plate 300. In this way, after the two electrode plates 300 and the separator 50 are wound for a plurality of turns to form the electrode body 20, the first protruding portions 311 provide support for the separator 50 to enable contact. When the electrode body 20 expands, the first protruding portions 311 can still support the separator 50. The contact area between the first protruding portion 311 and the separator 50 is small, so that a space for accommodating an electrolyte solution is available between a part, corresponding to the protrusion region 310, of the electrode plate 300 and the separator 50, thereby preventing abnormalities such as insufficient electrolyte solution and poor infiltration between the electrode plate 300 and the separator 50 due to expansion and squeezing.

When the two electrode plates 300 and the separator 50 are flattened and stacked along the thickness direction Z of the electrode plates 300, a plurality of first protruding portions 311 of one of the electrode plates 300 may protrude toward the side where the other electrode plate 300 is located. In this way, after the two electrode plates 300 and the separator 50 are wound along the length direction X of the electrode plate 300, the first protruding portions 311 of the electrode plate 300 protrude toward the side where the winding center of the electrode body 20 is located. Alternatively, when the two electrode plates 300 and the separator 50 are flattened and stacked along the thickness direction Z of the electrode plates 300, a plurality of first protruding portions 311 of one of the electrode plates 300 may protrude away from the side where the other electrode plate 300 is located. In this way, after the two electrode plates 300 and the separator 50 are wound along the length direction X of the electrode plate 300, the first protruding portions 311 of the electrode plate 300 protrude away from the side where the winding center of the electrode body 20 is located. When both electrode plates 300 include the protrusion region 310, the first protruding portions 311 of any electrode plate 300 among the two electrode plates 300 protrude toward the side where the other electrode plate 300 is located, or, the first protruding portions 311 of any electrode plate 300 among the two electrode plates 300 protrude away from the side where the other electrode plate 300 is located. Described above are merely examples. The orientation of the first protruding portions 311 of each electrode plate 300 is not limited herein, and may be selected according to actual needs.

The electrode plate 300 includes a current collector and an active material layer. The active material layer is disposed on a surface of the current collector. A surface, facing away from the current collector, of the active material layer includes a protrusion region 310. The surface, facing away from the current collector, of the active material layer in the protrusion region 310 further includes a tab region 320 and an end clearance region 330. Neither the tab region 320 nor the end clearance region 330 is provided with the first protruding portions 311. After the two electrode plates 300 and the separator 50 are wound, the surfaces, corresponding to the tab region 320 and the end clearance region 330, of the electrode plates 300 may be spaced apart from the separator 50.

As shown in FIG. 2, the end clearance region 330 is provided at an end of the protrusion region 310 in the length direction X of the electrode plate 300, and extends to the edge of the electrode plate 300. Correspondingly, after the two electrode plates 300 and the separator 50 are wound, the end clearance region 330 may be located in several innermost turns of the electrode body 20, thereby facilitating the winding and formation of the electrode body 20, and improving the structural stability at the central region of the electrode body 20. Alternatively, the end clearance region 330 may be located in several outermost turns of the electrode body 20, so that the end clearance region 330 can serve as a buffer region between the first protruding portion 311 and the tail end of the electrode body 20. In this way, a part, corresponding to the end clearance region 330, of the electrode plate 300 can more stably form a constraint on the inner-layer structure of the electrode body 20, thereby improving the packaging stability of the outer-layer region of the electrode body 20. In particular, when the electrode body 20 assumes a tendency to expand, the electrode body that ends with the end clearance region 330 provided with no first protruding portions 311 can prevent the tail of the electrode body 20 from slipping due to expansion stress, thereby improving the structural stability of the electrode body 20.

As shown in FIG. 2, the tab region 320 extends to the edge of the electrode plate 300 in the width direction Y of the electrode plate 300. The tab assembly 40 is disposed in the tab region 320, and the tab assembly 40 is spaced apart from the protrusion region 310. When the tab assembly 40 is mounted in the tab region 320, the processing method of the tab region affects the mounting stability of the tab assembly 40 and the stability of the structure around the tab assembly 40, and in turn, affects the stability of the interface of the electrode plate 300. For example, when the tab assembly 40 is press-fitted to the electrode plate 300 by rolling, the tab assembly 40 and the region provided with the first protruding portions 311 are press-fitted together. Alternatively, when the distance between the tab assembly 40 and the first protruding portion 311 is excessively short, the first protruding portion 311 may be deformed, indented, or otherwise affected, thereby deteriorating the interface of the electrode plate 300 in the region near the tab assembly 40. In this embodiment of this application, the tab region 320 is planned for mounting the tab assembly 40, thereby facilitating the mounting of the tab assembly 40, reducing the process difficulty, improving the mounting stability of the tab assembly 40, improving the interface stability near the tab assembly 40. The above arrangement also can stagger the tab assembly 40 from the first protruding portion 311 in the thickness direction Z of the electrode plate 300, thereby increasing the energy density of the battery when the electrode assembly is applied to a battery.

Understandably, the wider the distribution range of the plurality of first protruding portions 311 provided on the electrode plate 300, the larger the effective supporting area of the plurality of first protruding portions 311 for the entire electrode body 20, and the fewer the problems caused by the squeezing. However, the applicant hereof finds that, when the first protruding portions 311 are disposed indiscriminately in all regions of the electrode plate 300, the squeezing-induced problems at the corner part 22 can be alleviated, but adverse effects, such as poor infiltration of electrolyte solution in local regions and insufficient amount of retained electrolyte solution, are brought to the straight part 21. In an embodiment of this application, the tab region 320 is provided in combination with the end clearance region 330. The end clearance region 330 can provide a winding buffer region for the winding of the electrode body 20, thereby improving the winding stability of the electrode body 20, reducing the probability of winding instability caused by the arrangement in which the region with the first protruding portion 311 is a winding start point or a winding termination point, and protecting the straight part 21. Moreover, in conjunction with the tab region 320, the arrangement hereof can prevent the expansion of a part of the electrode body 20, the part is fitted with the tab assembly 40, and the expansion drives the tab assembly 40 to squeeze the electrode body 20. The arrangement hereof reduces the mutual damage caused between the tab assembly 40 and the electrode body 20. The tab region 320 extends to the edge of the electrode plate 300. Due to the presence of the first protruding portion 311, the supporting effect exerted by the first protruding portion 311 can be extended to the tab region 320, so that the tab region 320 of the electrode plate 300 is not prone to be squeezed. In addition, a part of the region can be reserved for accommodating the electrolyte solution, thereby facilitating circulation of the electrolyte solution into and out of the electrode body 20, and improving the electrolyte infiltration effect. Therefore, the electrode assembly according to an embodiment of this application not only alleviate the interface problem caused by the squeezing at the corner part 22, but also reduce the squeezing-induced adverse effects at the straight part 21. When applied to a battery, the electrode assembly can improve the performance at the corner position of a battery cell, and enhance the overall cycle performance of the battery.

The end clearance region 330 in an embodiment of this application includes at least one of a head clearance region 331 and a tail clearance region 332. The head clearance region 331 and the tail clearance region 332 run through the electrode plate 300 in the width direction Y of the electrode plate 300 respectively. In the length direction X of the electrode plate 300, the head clearance region 331 is provided at one end of the protrusion region 310, and the tail clearance region 332 is provided at another end of the protrusion region 310. The electrode plate 300 is wound together with the separator 50 from the head clearance region 331 along the length direction X of the electrode plate 300 to form a flat electrode body 20. In an embodiment of this application, if only one of the head clearance region 331 or the tail clearance region 332 is included, the tail clearance region 332 is preferably included in the end clearance region 330, thereby more effectively improving the winding stability of the electrode body 20. More preferably, the end clearance region 330 includes both the head clearance region 331 and the tail clearance region 332, thereby more effectively improving the winding stability of the electrode body 20. Optionally, when the electrode plate 300 is in an unwound state, the outer contour of the head clearance region 331 is rectangular, and the outer contour of the tail clearance region 332 is rectangular.

As shown in FIG. 2, in the length direction X of the electrode plate 300, the dimension of the tail clearance region 332 is D, and D satisfies: 30 mm ≤ D ≤ 1000 mm. For example, D may be 30 mm, 50 mm, 100 mm, 150 mm, 300 mm, 500 mm, 1000 mm, or a value falling within a range formed by any two thereof. When the dimension D of the tail clearance region 332 falls within the range of 30 mm to 1000 mm, the length of the tail clearance region 332 is appropriate for termination of the winding, thereby improving the connection stability at the termination point of the electrode body 20, and in turn, achieving high stability of the entire electrode assembly during winding. Moreover, with the dimension falling within the above range, the protrusions near the outer turns are distributed in an appropriate range, thereby providing support for the outer turns of jelly-roll units, and alleviating the squeezing on the outer turns of the electrode body 20. When D is less than a lower limit of 30 mm, the dimension of the tail clearance region 332 is excessively small, and the distance from the protrusion to the edge of the electrode plate 300 in the length direction X of the electrode plate 300 is excessively small, making it difficult to improve the packaging stability at the termination point of the electrode body 20. When D is greater than an upper limit of 1000 mm, the dimension of the tail clearance region 332 is excessively large and the occupied region is excessively large. Consequently, the distribution region of the protrusions is insufficient, and the supporting effect of the first protruding portion 311 is inferior, thereby making it difficult to improve the electrolyte infiltration effect for the outer turns of the electrode plate 300. Preferably, D satisfies: 100 mm ≤ D ≤ 500 mm.

In the length direction X of the electrode plate 300, the dimension of the head clearance region 331 is A, and A satisfies: 30 mm ≤ A ≤ 1000 mm. For example, A may be 30 mm, 50 mm, 100 mm, 200 mm, 1000 mm, or a value falling within a range formed by any two thereof. When the dimension A of the head clearance region 331 falls within the range of 30 mm to 1000 mm, it is convenient to achieve an appropriate distribution range of the protrusion region 310, the first protruding portions 311 on the inner turns can exert a supporting effect more reliably, and the electrolyte infiltration effect for the inner turns of the electrode body 20 can be improved. In addition, the above dimension makes it convenient to coordinate with the tail clearance region 332 to achieve an appropriate spacing between the head clearance region 331 and the tail clearance region 332, where the spacing is used for providing the protrusion region 310. In this way, the distribution range of the protrusion region 310 is appropriate, thereby alleviating the squeezing problem more effectively. When A is less than the lower limit of 30 mm, the dimension of the head clearance region 331 is excessively small, thereby making it inconvenient to align the ends of the two electrode plates 300 and the separator 50. When A is greater than the upper limit of 1000 mm, the dimension of the head clearance region 331 is excessively large in length, thereby occupying a relatively large area, resulting in an insufficient supporting force of the inner turns of the electrode body 20, and being prone to cause abnormalities such as insufficient electrolyte infiltration in the inner turns of the electrode body 20. Preferably, A satisfies: 60 mm ≤ D ≤ 500 mm.

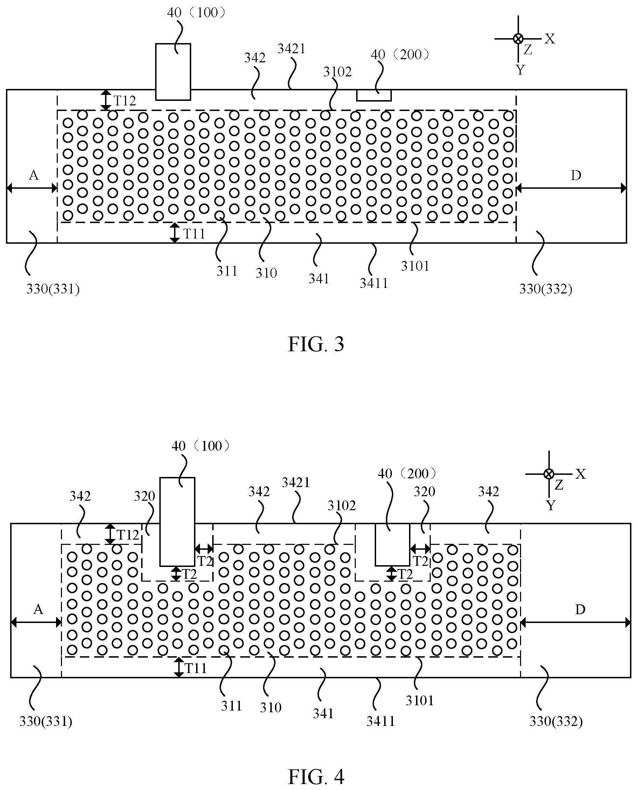

The protrusion region 310 is spaced apart from the edge of the electrode plate 300 in the width direction Y of the electrode plate 300. As shown in FIG. 3 and FIG. 4, in the width direction Y of the electrode plate 300, the electrode plate 300 includes a first region 341 connected to one side of the protrusion region 310 and a second region 342 connected to another side of the protrusion region 310. The first region 341 extends to the edge of the electrode plate 300 along a direction away from the second region 342. The second region 342 extends to the edge of the electrode plate 300 along a direction away from the first region 341. In other words, the two opposite boundaries of the protrusion region 310 in the width direction Y of the electrode plate 300 are spaced apart from the corresponding edges of the electrode plate 300 respectively.

A shortest distance between the protrusion region 310 and the edge, coated with an active material layer, of the electrode plate 300 in the width direction Y of the electrode plate is T1. T1 satisfies: 0.5 mm ≤ T1 ≤ 30 mm. For example, T1 may be 0.5 mm, 1 mm, 2 mm, 10 mm, 15 mm, 20 mm, 30 mm, or a value falling within a range formed by any two thereof. When T1 is less than the lower limit of 0.5 mm, the protrusion region 310 is excessively close to the edge, coated with the active material layer, of the electrode plate 300, thereby being prone to squeeze and deform the first protruding portion 311. In addition, due to the stress existent after processing the first protruding portion 311, the width of the region reserved at the edge of the protrusion region 310 and provided with no first protruding portion 311 is excessively narrow. The electrode plate 300 in the edge region is prone to exhibit abnormal structures such as bends, unevenness, and wavy edges under stress, thereby affecting the accuracy of monitoring and positioning of the electrode plate 300 during the winding. When T1 is greater than the upper limit of 30 mm, the protrusion region 310 is excessively far from the edge, coated with the active material layer, of the electrode plate 300. The distribution region of the first protruding portion 311 is excessively small, and the supporting force is insufficient. Preferably, T1 satisfies: 1 mm ≤ T1 ≤ 30 mm. More preferably, T1 satisfies: 3 mm ≤ T1 ≤ 30 mm. A protection adhesive 200 is affixed to the tab region 320. In the tab region 320, all positions other than the tab 100 are coated with an active material layer. All other regions of the electrode plate 300 are coated with the active material layer. The active material layer of the electrode plate 300 is disposed on the surface of the current collector. In the thickness direction of the electrode plate 300, the active material layer covers the entire surface of the current collector. In some other embodiments, the current collector includes a coating portion and a blank foil portion. The blank foil portion is connected to the outside of the coating portion in the width direction Y of the electrode plate 300. The active material layer covers the entire surface of the coating portion, and avoids the surface of the blank foil portion. This design can reduce lithium plating to a greater extent, reduce the adverse effect caused by the cold pressing on the deformation of the battery cell, and improve the safety performance of the battery.

Specifically, the electrode plate 300 includes a first edge 3411 and a second edge 3421 that are disposed opposite to each other in the width direction Y of the electrode plate 300. The protrusion region 310 is defined by a first boundary 3101 and a second boundary 3102 opposite to each other in the width direction Y of the electrode plate 300. The first region 341 is formed between the first edge 3411 and the first boundary 3101. The second region 342 is formed between the second edge 3421 and the second boundary 3102. In the width direction Y of the electrode plate 300, the distance between the first edge 3411 and the first boundary 3101 is the width T11 of the first region 341 in the width direction Y of the electrode plate 300. The distance between the second edge 3421 and the second boundary 3102 is the width T12 of the second region 342 in the width direction Y of the electrode plate 300. When the electrode plate 300 includes the first region 341 and the second region 342, the distance T1 between the protrusion region 310 and the edge of the active material layer in the width direction Y of the electrode plate 300 includes T11 and T12. T11 satisfies: 0.5 mm ≤ T11 ≤ 30 mm. T12 satisfies: 0.5 mm ≤ T12 ≤ 30 mm. The difference between the width T11 of the first region 341 in the width direction Y of the electrode plate 300 and the width T12 of the second region 342 in the width direction Y of the electrode plate 300 is △T1. △T1 = |T11 - T12|. △T1 satisfies: 0 mm ≤ △T1 ≤ 29.5 mm. When this range is met, the lithium ion migration rate can be made to meet an appropriate range during a high-rate charge and discharge test, thereby improving the high- and low-temperature cycle performance of the battery.

In addition, the tab assembly 40 and the protrusion region 310 are also spaced apart, thereby making it convenient to process the first protruding portion 311 on the electrode plate 300, making it convenient to mount the tab assembly 40 into the tab region 320 of the electrode plate 300, and improving the mounting stability of the tab assembly 40 and structural stability of the first protruding portion 311.

As shown in FIG. 2 and FIG. 4, the spacing between the tab assembly 40 and the protrusion region 310 is T2. The spacing between the tab assembly 40 and the protrusion region 310 includes a spacing in the length direction X and a spacing in the width direction Y of the electrode plate 300, both being T2. T2 satisfies: 0.5 mm ≤ T2 ≤ 30 mm. For example, T2 may be 0.5 mm, 1 mm, 2 mm, 8 mm, 10 mm, 15 mm, 20 mm, 30 mm, or a value falling within a range formed by any two thereof. When T2 falls within the range of 0.5 mm to 30 mm, the spacing between the tab assembly 40 and the protrusion region 310 is appropriate, thereby not only meeting the requirement of supporting the tab assembly 40 by the first protruding portion 311, but also facilitating processing. When T2 is less than the lower limit of 0.5 mm, the spacing is excessively small. When the tab assembly 40 is mounted in the tab region 320 of the electrode plate 300, the tab assembly is prone to affect the structural stability of the first protruding portion 311, posing high difficulty of processing. When T2 is greater than the upper limit of 30 mm, the spacing is excessively large, and the tab region 320 occupies a relatively large space. Correspondingly, the distribution region of the first protrusions 311 is reduced, and the supporting force of the first protruding portions 311 distributed in the protrusion region 310 is prone to be insufficient.

The tab assembly 40 includes tabs 100. The number of tabs 100 is plural. A part of the tabs 100 is mounted on one of the electrode plates 300, and another part of the tabs 100 is mounted on the other electrode plate 300. The tabs 100 mounted on the positive electrode plate 301 are positive tabs, and the tabs 100 mounted on the negative electrode plate 302 are negative tabs. When the tabs 100 are disposed on the electrode plate 300 provided with a protrusion region 310, a tab region 320, and an end clearance region 330, each tab 100 is disposed in one of the tab regions 320. Optionally, when only one of the two electrode plates 300 of opposite polarities is provided with the protrusion region 310, the tab region 320, and the end clearance region 330, a part of the tabs 100 is disposed in the tab region 320 of one of the electrode plates 300 correspondingly, and another part of the tabs 100 is directly mounted in the edge region of the other electrode plate 300. Optionally, when the two electrode plates 300 of opposite polarities are both provided with the protrusion region 310, the tab region 320, and the end clearance region 330, a part of the tabs 100 is disposed in the tab region 320 of one of the electrode plates 300 correspondingly, and another part of the tabs 100 is disposed in the tab region 320 of the other electrode plate 300 correspondingly. It is hereby noted that after the separator 50 and the two electrode plates 300 are wound to form a flat electrode body 20, the tab 100 mounted on one of the electrode plates 300 needs to be spaced apart from the tab 100 mounted on the other electrode plate 300, so as to prevent short-circuiting between the two electrode plates 300 of opposite polarities.

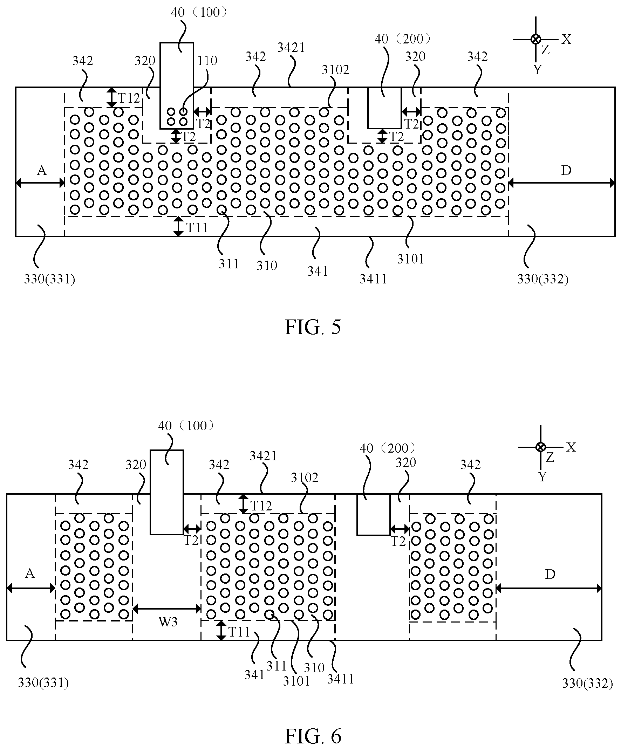

Optionally, as shown in FIG. 5, the tab 100 includes a connecting section connected to the electrode plate 300 and a mating section extending beyond the edge of the electrode plate 300. A plurality of second protruding portions 110 are disposed protrusively on a surface, facing away from the electrode plate, of the connecting section. The second protruding portions 110 provide support for the structure at the tab 100. For example, the second protruding portions 110 are in contact with the separator 50 to provide support for the separator 50, thereby improving the electrolyte infiltration effect at the tab 100. Further, the boundary of a region, provided with a plurality of second protruding portions 110, of the tab 100 is flush with the second boundary 3102 of the protrusion region 310. The shape, dimension, and layout may be the same between the second protruding portion 110 and the first protruding portion 311.

When lithium ions migrate to the negative tab, for lack of a lithiation-aiding structure such as graphite at the negative tab, lithium plating is prone to occur at the negative tab. Optionally, the tab assembly 40 further includes a protection adhesive 200. The number of protection adhesives 200 may be plural. After the separator 50 and the two electrode plates 300 are wound to form a flat electrode body 20, each protection adhesive 200 closely fits the surface of the negative tab to separate the positive electrode plate from the negative tab, thereby preventing lithium plating around the negative tab.

Optionally, all protection adhesives 200 are mounted on the same electrode plate 300. For example, all protection adhesives 200 are mounted on the same electrode plate 300 provided with the protrusion region 310, the tab region 320, and the end clearance region 330. Alternatively, all protection adhesives 200 are mounted on one of the electrode plates 300 that is not provided with the protrusion region 310, the tab region 320, or the end clearance region 330. Alternatively, a part of the protection adhesives 200 is mounted on one of the electrode plates 300, and another part of the protection adhesive 200 is mounted on the other electrode plate 300. When the protection adhesives 200 are mounted on the electrode plate 300 provided with the protrusion region 310, the tab region 320, and the end clearance region 330, each protection adhesive 200 is mounted in one of the tab regions 320.

In an embodiment of this application, the number of the tab regions 320 may be one or more. As shown in FIG. 2 and FIG. 3, the number of the tab regions 320 is one, and the tab region 320 extends along the length direction X of the electrode plate 300 to connect to the end clearance region 330. Specifically, in the length direction X of the electrode plate 300, one end of the tab region 320 is connected to the head clearance region 331, and the other end of the tab region is connected to the tail clearance region 332. In this way, the outer peripheral contour of the protrusion region 310 is regular, thereby making it convenient to processing the first protruding portions 311 in the protrusion region 310 of the electrode plate 300, and achieving high processing efficiency. In addition, the position of the tab assembly 40 mounted in the tab region 320 is relatively flexible, thereby being adaptable to a variety of different mounting requirements.

Optionally, as shown in FIG. 2, in the width direction Y of the electrode plate 300, the electrode plate 300 includes a first region 341 connected to one side of the protrusion region 310 and a tab region 320 connected to the other side of the protrusion region 310. In other words, the electrode plate 300 is not provided with a second region 342. In this case, the width T11 of the first region 341 in the width direction Y of the electrode plate 300 is the distance T1 between the protrusion region 310 and the edge of the electrode plate 300 in the width direction Y. In the width direction Y of the electrode plate 300, the width of the tab region 320 is W1, satisfying: T1 < W1. In this case, the width of the tab region 320 is relatively large, thereby making it convenient to increase the contact area of the tab assembly 40 mounted on the electrode plate 300, and improving the mounting stability of the tab assembly 40. Further, W1 satisfies: 2 mm ≤ W1 ≤ 40 mm. For example, W1 may be 2 mm, 6 mm, 10 mm, 15 mm, 28 mm, 30 mm, 40 mm, or a value falling within a range formed by any two thereof.

Optionally, as shown in FIG. 3, in the width direction Y of the electrode plate 300, the electrode plate 300 includes a first region 341 connected to one side of the protrusion region 310 and a second region 342 connected to the other side of the protrusion region 310. A part, away from the protrusions, of the second region 342 forms a tab region 320. The width of the tab region 320 is W1, satisfying: W1 < T1. Specifically, W1 < T12. In this way, the regions on both sides of the protrusion region 310 are fully utilized for mounting the tab assembly 40, so that a larger region is available for accommodating the first protruding portions 311, thereby increasing the supporting area of the first protruding portions 311, and in turn, improving the supporting stability of the first protruding portions 311.

As shown in FIG. 6, both the number of tab regions 320 and the number of protrusion regions 310 are plural. In the length direction X of the electrode plate 300, a tab region 320 is disposed between two adjacent protrusion regions 310. Each tab region 320 runs through the electrode plate 300 along the width direction Y of the electrode plate 300, so as to facilitate the processing of the first protruding portions 311 in the plurality of protrusion regions 310 of the electrode plate 300. Correspondingly, the tab assembly disposed in the tab region 320 may extend from one edge to another edge of the electrode plate 300 in the width direction Y of the electrode plate 300, and the two ends of the electrode plate may extend beyond the edge of the electrode plate 300. Optionally, the edge contour of the tab region 320 is a quadrilateral such as a rectangle or a square, and the edge contour of the protrusion region 310 may be a quadrilateral such as a rectangle or a square. In the length direction X of the electrode plate 300, the width of any tab region 320 is W3. W3 satisfies: 4 mm ≤ W3 ≤ 100 mm. For example, W3 may be 4 mm, 6 mm, 10 mm, 15 mm, 20 mm, 25 mm, 50 mm, 80 mm, 100 mm, or a value falling within a range formed by any two thereof. Setting W3 to fall within the range of 4 mm to 100 mm facilitates the allocation of the width of the tab region 320 and the protrusion region 310, and improves the supporting stability of the first protruding portions 311 of the protrusion region 310, thereby improving the structural stability of the electrode body 20.

Referring back to FIG. 4, the protrusion region 310 includes at least one clearance opening region. Each clearance opening region extends along the width direction Y of the electrode plate 300 to the edge of the electrode plate 300 to form a tab region 320. The plurality of clearance opening regions extend toward the same edge of the electrode plate 300 in the width direction Y of the electrode plate 300, for example, extend toward the second edge 3421 of the electrode plate. In this case, the electrode plate 300 includes one first region 341 and a plurality of second regions 342. Each clearance opening region extends along the width direction Y of the electrode plate 300, and passes between two adjacent second regions 342, and continues to extend to the edge of the electrode plate 300 to form the tab region 320. In this embodiment, all parts of the electrode plate 300 are fully utilized, thereby making the areas of the designed protrusion region 310 and tab region 320 relatively large. The design is suitable for the mounting of the tab assembly 40 with a relatively large connection area, and achieves a larger effective supporting area of the first protruding portions 311 of the protrusion region 310. Optionally, in this embodiment, the edge contour of the tab region 320 may be a polygon such as a rectangle or a square. In the width direction Y of the electrode plate 300, the width of the tab region 320 is W1, satisfying: T1 < W1. In this case, the width of the tab region 320 is relatively large, thereby making it convenient to increase the contact area of the tab assembly 40 mounted on the electrode plate 300.

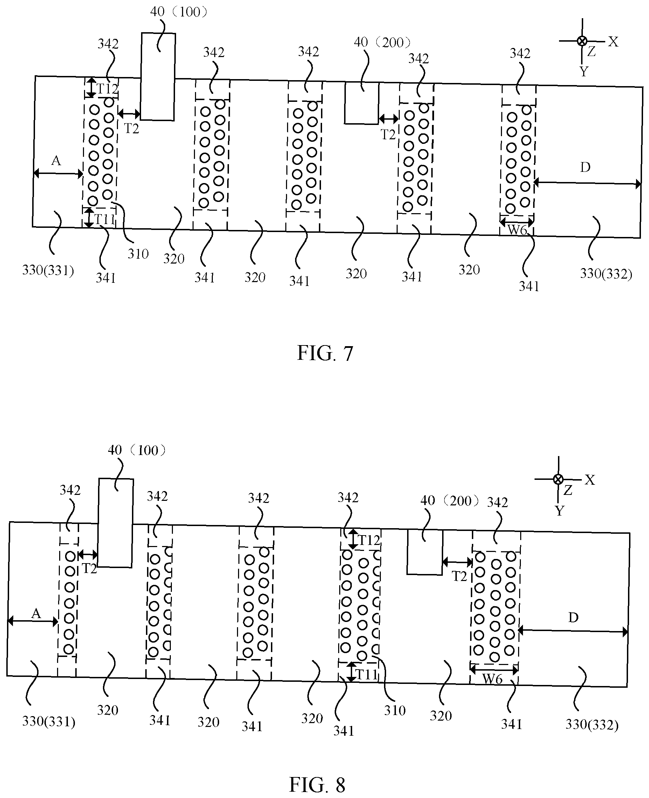

As shown in FIG. 7, optionally, the tab region 320 is provided at a straight part 21. The protrusion region 310 is provided at a corner part 22. In the length direction X of the electrode plate 300, the dimension of the corner part 22 is W5, and the dimension of the protrusion region 310 is W6, satisfying: W6 = W5. In this way, the first protruding portion 311 contacts the corresponding electrode plate 300 only at the corner part 22 to provide support. In this case, the first protruding portion 311 provides firm support, produces an effect of balancing the infiltration between the straight part 21 and the corner part 22, compensates for the shortcomings of the battery cell, and improves the overall cycle performance of the battery cell.

As shown in FIG. 8, optionally, the tab region 320 is provided in the straight part 21. The protrusion regions 310 are provided in the corner part 22 and extends to the straight part 21. The two protrusion regions 310 of the same turn of the electrode plate 300 are spaced apart. In the length direction X of the electrode plate 300, the dimension of the corner part 22 is W5, and the dimension of the protrusion region 310 is W6, satisfying: W6 > W5, so that the first protruding portions 311 of the protrusion region 310 can support a wider area. This arrangement improves the infiltration channels of the electrode plate 300, solves the problem of insufficient electrolyte solution and premature failure in some regions caused by uneven infiltration, and enhances the cycle performance. Therefore, when applied in a battery, the electrode assembly can prolong the charge-and-discharge cycle life of the battery cycled at a current of 3C/5C, and increase the cycle life characterized by the number of cycles of the battery from original 300 to 800 or more.

Optionally, W5 satisfies: 0.5 mm ≤ W5 ≤ 20 mm. For example, W5 may be 0.5 mm, 2 mm, 5 mm, 8 mm, 10 mm, 12 mm, 15 mm, 20 mm, or a value falling within a range formed by any two thereof. W6 satisfies: 0.5 mm ≤ W6 ≤ 100 mm. For example, W6 may be 0.5 mm, 2 mm, 8 mm, 15 mm, 30 mm, 50 mm, 100 mm, or a value falling within a range formed by any two thereof.

Regarding the electrode plate 300 shown in FIG. 7, optionally, the dimensions W6 of all protrusion regions 310 in the length direction X of the electrode plate 300 are equal. Understandably, from the inner turns to the outer turns of the electrode body 20, the circumferences of various turns of the electrode plate 300 gradually increase. The dimension of the corner part 22 in the outermost turn of the electrode plate 300 in the length direction X of the electrode plate 300 is Wmax, satisfying: W6 ≥ Wmax. In this way, in a case that the dimensions W6 of all protrusion regions 310 in the length direction X of the electrode plate 300 are equal, each protrusion region 310 can cover the corresponding corner part 22. In addition, some of the protrusion regions 310 can extend to partially cover the straight part 21 while covering the corner part 22.

Optionally, from the inner turns to the outer turns of the electrode body 20, the dimensions W6 of the protrusion regions 310 in the length direction X of the electrode plate 300 gradually increase. In this case, from the inner turns to the outer turns of the electrode body 20, the dimensions W6 of the protrusion regions 310 in the length direction X of the electrode plate 300 gradually increase with the increase of the dimension of the corner part 22 in the length direction X of the electrode plate 300. In this case, the dimension W6 of a protrusion region 310 in the length direction X of the electrode plate 300 may be equal to the dimension of the corresponding corner part 22 in the length direction X of the electrode plate 300, that is, the protrusion region 310 covers only the corresponding corner part 22; or, the dimension W6 of a protrusion region 310 in the length direction X of the electrode plate 300 may be greater than the dimension of the corresponding corner part 22 in the length direction X of the electrode plate 300, that is, the protrusion region 310 extends to the straight part 21 while covering the corresponding corner part 22.

In an embodiment of this application, the first protruding portion 311 includes a vertex and a bottom edge. The bottom edge of the first protruding portion 311 is connected to a surface of another structure of the electrode plate 300 (the surface may be a flat surface or a convex curved surface). The first protruding portion 311 extends from the bottom edge so as to be disposed protrusively on the surface connected to the first protruding portion. The vertex of the first protruding portion 311 is a point, farthest from the bottom edge in the thickness direction of the electrode plate 300, of the first protruding portion 311. The thickness of the first protruding portion 311 is a dimension from the vertex of the first protruding portion 311 to the bottom edge of the first protruding portion 311 in the thickness direction of the electrode plate 300. When the corner part 22 includes the first protruding portion 311, the height of the first protruding portion 311 disposed at the corner part 22 is h1. When the straight part 21 includes the first protruding portion 311, the height of the first protruding portion 311 disposed at the straight part 21 is h2, satisfying: h2 ≤ h1, thereby improving the electrolyte infiltration effect. Further, h1 satisfies: 55 µm ≤ h1 ≤ 70 µm; and the height of the first protruding portion 311 disposed at the straight part 21 is h2, and h2 satisfies: 10 µm ≤ h2 ≤ 18 µm.

It is hereby noted that, all technical solutions in exemplary embodiments of this application, including the technical solutions shown in FIG. 7 and FIG. 8, satisfy h2 ≤ h1, 55 µm ≤ h1 ≤ 70 µm, and 10 µm ≤ h2 ≤ 18 when both the straight part 21 and the corner part 22 are provided with the first protruding portions 311.

In addition, preferably, after the electrode plate 300 is wound together with the separator 50 for a plurality of turns along the length direction of the electrode plate 300 to form an electrode body 20, the plurality of first protruding portions 311 in each turn of the electrode plate 300 protrude toward the winding center of the electrode body 20 in the thickness direction of the electrode plate 300, thereby more effectively improving the electrolyte infiltration effect.

Optionally, the outer contours of the first protruding portions 311 are circular, elliptical, or regular polygonal. The top surface, which is in contact with the separator 50, of a first protruding portion 311 is a circular arc surface, thereby preventing the tip of the first protruding portion 311 from being excessively sharp and damaging the separator 50.

Optionally, the outer contour dimensions of the first protruding portions 311 are equal. For example, when the outer contours of the first protruding portions 311 are circular, the outer contour radii of the first protruding portions 311 of each circle are equal; and when the outer contours of the first protruding portions 311 are a regular polygon, the radii of the circumcircles of the regular polygon are equal.

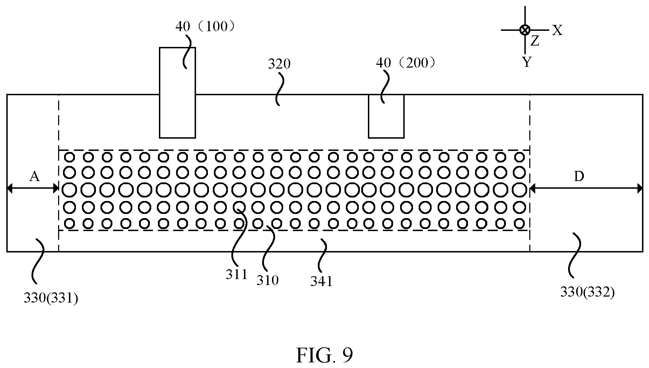

The two electrode plates 300 of opposite polarities and the separator 50 are wound to form a flat electrode body 20. At the central region of the protrusion region 310, the probability of insufficient electrolyte solution caused by squeezing is higher. In an embodiment of this application, the outer contour dimensions of the first protruding portions 311 located at the central region of the protrusion region 310 are set to be larger, so as to increase the spacing between the electrode plate 300 and the separator 50 at the central region of the protrusion region 310, and in turn, alleviate the electrolyte insufficiency at the central region of the protrusion region 310, and improve the electrolyte infiltration effect. The electrode plates 300 in both FIG. 2 to FIG. 8 above may be designed such that the outer contour dimensions of the first protruding portions 311 at the central region of the protrusion region 310 are relatively large, and that the outer contour dimensions of the first protruding portions 311 at the edge region of the protrusion region 310 are relatively small, so as to alleviate electrolyte insufficiency. Optionally, as shown in FIG. 9, in the width direction Y of the electrode plate 300, the outer contour dimensions of the first protruding portions 311 gradually decrease from the central region to the edge region of the protrusion region 310; and/or, in the length direction X of the electrode plate 300, the outer contour dimensions of the first protruding portions 311 gradually decrease from the central region to the edge region of the protrusion region 310.

The electrode plate 300 in an embodiment of this application includes a current collector and an active material layer disposed on a surface of the current collector. The first protruding portion 311 may be jointly formed by a part of the current collector and a part of the active material layer. For example, the first protruding portion 311 in an embodiment of this application may be processed by a rolling method. Specifically, one side of the electrode plate 300 exerts an acting force on a partial region of the electrode plate 300, and the current collector and the active material layer in the partial region are deformed and bent together to form the first protruding portion 311.

The positive electrode plate 301, the negative electrode plate 302, the separator 50, the positive tab 100, and the negative tab 100 are not particularly limited herein. Various elements that are known in the art for use in an electrode assembly are applicable to this application.

In some exemplary embodiments, the negative electrode plate 302 may include a negative current collector and a negative active material layer disposed on a surface of the negative current collector. As an example, the negative current collector may be at least one of copper foil, aluminum foil, nickel foil, or a carbon-based current collector. The thickness of the negative current collector may be 1 µm to 200 µm. The negative active material layer may be disposed on one surface or two opposite surfaces of the negative current collector. Further, in the thickness direction Z of the negative electrode plate, the negative active material layer may be applied only on a partial region of the negative current collector. As an example, the thickness of the negative active material layer may be 10 µm to 500 µm.

The negative active material layer includes a negative active material. As an example, the negative active material includes at least one of lithium metal, natural graphite, artificial graphite, or a silicon-based material. The silicon-based material includes at least one of silicon, a silicon-oxygen compound, a silicon-carbon compound, or a silicon alloy. The negative active material layer may include a conductive agent and/or a binder. For example, the conductive agent in the negative active material layer may include at least one of carbon black, acetylene black, Ketjen black, flake graphite, graphene, carbon nanotubes, carbon fibers, or carbon nanowires. The binder in the negative active material layer may include at least one of carboxymethyl cellulose (CMC), polyacrylic acid, polyacrylate salt, polyacrylate ester, polyvinylpyrrolidone, polyaniline, polyimide, polyamideimide, polysiloxane, styrene-butadiene rubber, epoxy resin, polyester resin, polyurethane resin, or polyfluorene.

In some exemplary embodiments, the positive electrode plate 301 includes a positive current collector and a positive active material layer disposed on a surface of the positive current collector. As an example, the positive current collector may be aluminum foil, or may be another type of positive current collector commonly used in the art instead. The thickness of the positive current collector may be 1 µm to 200 µm. The positive active material layer may be disposed on one surface or two opposite surfaces of the positive current collector. Further, in the thickness direction Z of the positive electrode plate 301, the positive active material layer may be applied only on a partial region of the positive current collector. The thickness of the positive active material layer may be 10 µm to 500 µm.

The positive active material layer includes a positive active material. The positive active material includes LiCoO2, LiNiO2, LiMn2O4, LiCo1-yMyO2, LiNi1-yMyO2, LiMn2-yMyO4, LiNixCoyMnzM1-x-y-zO2, where M is at least one selected from Fe, Co, Ni, Mn, Mg, Cu, Zn, Al, Sn, B, Ga, Cr, Sr, V, or Ti, 0 ≤ y ≤ 1, 0 ≤ x ≤ 1, 0 ≤ z ≤ 1, and x + y + z ≤ 1. As an example, the positive active material may include at least one of lithium cobalt oxide, lithium manganese oxide, lithium iron phosphate, lithium manganese iron phosphate, lithium nickel cobalt manganese oxide, lithium nickel cobalt aluminum oxide, or lithium nickel manganese oxide. The above positive active materials may be doped and/or coated. The positive active material layer further includes a binder and a conductive agent. As an example, the binder in the positive active material layer may include at least one of polyvinylidene difluoride, poly(vinylidene fluoride-co-hexafluoropropylene), poly(styrene-co-acrylate), poly(styrene-co-butadiene), polyamide, polyacrylonitrile, polyacrylic ester, polyacrylic acid, sodium polyacrylate, sodium carboxymethyl cellulose, polyvinyl acetate, polyvinylpyrrolidone, polyvinyl ether, polymethyl methacrylate, polytetrafluoroethylene, or polyhexafluoropropylene. The conductive agent in the positive active material layer may include at least one of carbon black, acetylene black, Ketjen black, flake graphite, graphene, carbon nanotubes, or carbon fibers.

In some exemplary embodiments, the separator 50 includes at least one of polyethylene, polypropylene, polyvinylidene fluoride, polyethylene terephthalate, polyimide, or aramid fiber. For example, the polyethylene includes at least one of high-density polyethylene, low-density polyethylene, or ultra-high-molecular-weight polyethylene. Especially, the polyethylene and the polypropylene are highly effective in preventing short circuits, and can improve stability of the electrode assembly through a shutdown effect. The thickness of the separator 50 falls within a range of approximately 3 µm to 500 µm.

An embodiment of this application further provides a battery. The battery includes a shell and the electrode assembly disclosed above. The electrode assembly is disposed in an inner space of the shell. The battery further includes an electrolyte solution. The electrolyte solution fills the inner space of the shell and infiltrates the electrode assembly. The electrolyte solution is not particularly limited herein. Various materials that are known in the art for use as an electrolyte solution are applicable to this application.

This application is further described below with reference to specific embodiments by using an electrode assembly of a lithium-ion battery as an example. Understandably, such embodiments are merely intended to illustrate this application but not to limit the scope of this application.

The lithium-ion battery is prepared by the following method in each embodiment and comparative embodiment of this application, and the performance of the lithium-ion battery is tested.

### I. Method for preparing a lithium-ion battery

### (1) Preparing a positive electrode plate 301

Dissolving lithium cobalt oxide (LiCoO2) as a positive active material, conductive carbon black as a conductive agent, and polyvinylidene difluoride (PVDF) as a binder at a mass ratio of 97.9 : 0.9 : 1.2 in an N-methylpyrrolidone (NMP) solvent to form a positive electrode slurry. Using a 9 µm-thick aluminum foil as a positive current collector, applying the positive electrode slurry onto the positive current collector, and performing steps of drying, cold pressing, and cutting to obtain a positive electrode plate. The compaction density of the positive active material layer of the positive electrode plate 301 is 4.2 g/cm3.

In the following embodiments, the positive electrode plate 301 includes a protrusion region 310, a tab region 320, and an end clearance region 330.

### (2) Preparing a negative electrode plate 302

Dissolving artificial graphite as a negative active material, styrene-butadiene rubber (SBR) as a binder, and sodium carboxymethyl cellulose (CMC) as a thickener at a mass ratio of 97.4 : 1.4 : 1.2 in deionized water to form a negative electrode slurry. Using a 10 µm-thick copper foil as a negative current collector, coating the negative current collector with the negative electrode slurry, and performing drying, cold pressing, and cutting to obtain a negative electrode plate. The compaction density of the negative active material layer of the negative electrode plate is 1.8 g/cm3.

### (3) Preparing a separator 50

Using a 5 µm-thick polyethylene (PE) film as a separator substrate, coating one side of the separator substrate with a 2 µm-thick aluminum oxide ceramic layer, and finally, applying polyvinylidene fluoride (PVDF) as a binder at a concentration of 2.5 mg/1540.25 mm² onto both sides of the separator substrate, both sides having been coated with a single ceramic layer. Performing drying to form a porous layer. The porosity of the porous layer of the separator 50 is 39%.

### (4) Preparing an electrolyte solution

Mixing well ethylene carbonate (EC for short), propylene carbonate (PC for short), diethyl carbonate (DEC for short), ethyl propionate (EP for short), and propyl propionate (PP for short) at a mass ratio of 1 : 1 : 1 : 1 : 1 in an environment in which the water content is less than 10 ppm, and then dissolving an electrolyte salt LiPF6 in the above nonaqueous solvent, and mixing well to form an electrolyte solution. Based on the mass of the electrolyte solution, the mass percent of the LiPF6 is 12.5%.

### (5) Assembling a lithium-ion battery

Mounting a positive tab 100 in one of the tab regions 320 of the positive electrode plate 301 by rolling. Affixing a protection adhesive 200 to another tab region 320 of the positive electrode plate 301. Mounting a negative tab 100 in the edge region of the negative electrode plate 302 by rolling.

Stacking sequentially the positive electrode plate 301 fitted with the positive tab 100, the separator 50, and the negative electrode plate 302 fitted with the negative tab 100 such that the separator 50 is located between the positive electrode plate 301 and the negative electrode plate 302 to serve a function of separation, and winding the stacked structure to obtain an electrode body 20. Putting the electrode assembly into an outer package made of an aluminum laminated film, dehydrating the electrode assembly at 80 °C, injecting the electrolyte solution, and sealing the package. Performing steps such as chemical formation, degassing, and edge trimming to obtain a lithium-ion battery. The following describes the test method of parameters in each embodiment of this application.

### II. Performance test of a lithium-ion battery

### (1) Testing the 25 °C cycle performance

Charging a lithium-ion battery at a constant current of 2C/5C in a 25 °C environment until the voltage reaches a nominal voltage of the battery (4.5 V, indicating a fully charged state), and then charging the battery at a constant voltage equivalent to the nominal voltage until the current drops to 0.02C. Subsequently, discharging the battery at a constant current of 0.5C until the voltage finally reaches 3.0 V, and recording the first-cycle discharge capacity. Subsequently, repeating the above steps to charge and discharge the battery cyclically, and recording the number of cycles (N) accumulated when the cycle capacity retention rate is less than or equal to 80%.

$Cycle capacity retention rate = \left(Nth-cycle discharge capacity/first-cycle discharge capacity\right) \times 100 % .$

### (2) Testing the 45 °C cycle performance

Charging a lithium-ion battery at a constant current of 2C/5C in a 45 °C environment until the voltage reaches a nominal voltage of the battery (4.5 V, indicating a fully charged state), and then charging the battery at a constant voltage equivalent to the nominal voltage until the current drops to 0.02C. Subsequently, discharging the battery at a constant current of 0.5C until the voltage finally reaches 3.0 V, and recording the first-cycle discharge capacity. Subsequently, repeating the above steps to charge and discharge the battery cyclically, and recording the number of cycles (N) accumulated when the cycle capacity retention rate is less than 80%.$Cycle capacity retention rate = \left(Nth-cycle discharge capacity/first-cycle discharge capacity\right) \times 100 % .$

### (3) Testing the yield rate of winding

Placing a separator between two electrode plates 300 (a positive electrode plate 301 and a negative electrode plate 302) of opposite polarities, and winding them in an integrated winding machine to form an electrode body samples continuously. Measuring, with an X-Ray device, an excess distance M of the edge of the negative electrode plate 302 of the electrode body beyond the edge of the positive electrode plate 301 in the width direction of the positive electrode plate 301. Determining a sample as qualified if M > 0.1. Counting the total number of samples (T) (the total number is 100) and the number of qualified samples (N).$Yield rate of winding = N / T \times 100 %$

### (4) Testing the infiltration improvement effect

Leaving an electrode assembly to stand at normal temperature (25 °C) for 24 hours, where the electrode assembly has been packaged in an aluminum laminated film as an outer package and filled with an electrolyte solution. Disassembling the battery, and observing the wetting status of the separator. Estimating and comparing the area of the wetted part. Categorizing the wetted areas into 3 levels: significant (wetting area: 60% to 100%), moderate (wetting area: 30% to 60%), and unchanged (wetting area: 0% to 30%). The non-wetted region usually exhibits an irregular water-mark boundary, and the difference in area is directly visible to naked eye.

### (5) Testing the electrolyte retention amount

The liquid retention amount is the amount of electrolyte solution that is ultimately retained in a lithium-ion battery. In order to ensure that the electrolyte solution is enough for consumption during chemical formation of the lithium-ion battery, an excess amount of electrolyte solution is usually injected. The excess electrolyte solution is extracted after completion of the chemical formation. The electrolyte solution is measured by weighing. The amount of injected electrolyte solution is m1, and the amount of extracted electrolyte solution is m2.

$Electrolyte retention amount = m 1 - m 2 .$

In Table 1, in Embodiments 1-1 to 1-21, the electrode plate 300 shown in FIG. 4 is used as a positive electrode plate 300. The relevant parameters in Embodiments 1-1 to 1-21 are shown in Table I.

**Table I**

| Item | Parameter | Value | Item | Parameter | Value |
|---|---|---|---|---|---|
| Dimension of tab region in width direction of electrode plate | W1 | 2 mm | Dimension of head clearance region | A | 100 mm |
| Dimension of tab region in length direction of electrode plate | W3 | 30 mm | Dimension of tail clearance region | D | 400 mm |

Comparative Embodiments 1-1 to 1-3 and Embodiments 1-2 to 1-21 differ from Embodiment 1-1 in the spacing T1 between the protrusion region 310 and the edge of the electrode plate, the spacing T21 between the tab and the protrusion region 310, and the spacing T22 between the protection adhesive and the protrusion region 310 of the lithium-ion battery (here, the spacing T2 between the tab and the protrusion region 310 of the lithium-ion battery is denoted as T21, and the spacing T2 between the protection adhesive and the protrusion region 310 is denoted as T22 for convenience of expression). The parameters and performance test results of the lithium-ion batteries in Comparative Embodiments 1-1 to 1-3 and Embodiments 1-1 to 1-21 are shown in Table 1.

**Table 1 (To be continued)**

| Item | Spacing between protrusion region and edge of electrode plate T1 (mm) | Spacing between tab and protrusion region T21 (mm) | Spacing between protection adhesive and protrusion region T22 (mm) | Number of cycles accumulated until cycle capacity retention rate ≤ 80% cycled at 2C at 25 °C |
|---|---|---|---|---|
| Embodiment 1-1 | 0.5 | 4 | 4 | 1200 |
| Embodiment 1-2 | 1 | 4 | 4 | 1250 |
| Embodiment 1-3 | 2 | 4 | 4 | 1260 |
| Embodiment 1-4 | 3 | 4 | 4 | 1350 |
| Embodiment 1-5 | 5 | 4 | 4 | 1350 |
| Embodiment 1-6 | 10 | 4 | 4 | 1350 |
| Embodiment 1-7 | 20 | 4 | 4 | 1380 |
| Embodiment 1-8 | 25 | 4 | 4 | 1360 |
| Embodiment 1-9 | 30 | 4 | 4 | 1330 |
| Embodiment 1-10 | 5 | 0.3 | 4 | 1210 |
| Embodiment 1-11 | 5 | 0.5 | 4 | 1300 |
| Embodiment 1-12 | 5 | 10 | 4 | 1280 |
| Embodiment 1-13 | 5 | 20 | 4 | 1290 |
| Embodiment 1-14 | 5 | 30 | 4 | 1280 |
| Embodiment 1-15 | 5 | 31.5 | 4 | 1210 |
| Embodiment 1-16 | 5 | 4 | 0.1 | 1200 |
| Embodiment 1-17 | 5 | 4 | 0.5 | 1300 |
| Embodiment 1-18 | 5 | 4 | 10 | 1280 |
| Embodiment 1-19 | 5 | 4 | 20 | 1260 |
| Embodiment 1-20 | 5 | 4 | 30 | 1230 |
| Embodiment 1-21 | 5 | 4 | 32 | 1200 |
| Comparative Embodiment 1-1 | 0 | 4 | 4 | 1000 |
| Comparative Embodiment 1-2 | 37 | 4 | 4 | 900 |
| Comparative Embodiment 1-3 | 33 | 4 | 4 | 950 |

**Table 1 (Continued)**

| | | | | |
|---|---|---|---|---|
| Embodiment 1-1 | 1200 | 900 | 900 | 98% |
| Embodiment 1-2 | 1250 | 950 | 900 | 97% |
| Embodiment 1-3 | 1250 | 1050 | 1030 | 95% |
| Embodiment 1-4 | 1350 | 1100 | 1050 | 96% |
| Embodiment 1-5 | 1350 | 1100 | 1100 | 95% |
| Embodiment 1-6 | 1350 | 1000 | 1000 | 96% |
| Embodiment 1-7 | 1390 | 1100 | 1150 | 96% |
| Embodiment 1-8 | 1350 | 1050 | 1100 | 95% |
| Embodiment 1-9 | 1350 | 1000 | 1000 | 95% |
| Embodiment 1-10 | 1220 | 850 | 850 | 94% |
| Embodiment 1-11 | 1300 | 900 | 900 | 99% |
| Embodiment 1-12 | 1285 | 950 | 980 | 99% |
| Embodiment 1-13 | 1280 | 900 | 900 | 99% |
| Embodiment 1-14 | 1250 | 890 | 880 | 99% |
| Embodiment 1-15 | 1200 | 850 | 800 | 93% |
| Embodiment 1-16 | 1220 | 850 | 850 | 92% |
| Embodiment 1-17 | 1300 | 950 | 950 | 99% |
| Embodiment 1-18 | 1250 | 980 | 980 | 99% |
| Embodiment 1-19 | 1240 | 950 | 950 | 99% |
| Embodiment 1-20 | 1250 | 930 | 940 | 99% |
| Embodiment 1-21 | 1240 | 800 | 840 | 92% |
| Comparative Embodiment 1-1 | 950 | 650 | 650 | 58% |
| Comparative Embodiment 1-2 | 850 | 700 | 700 | 40% |
| Comparative Embodiment 1-3 | 800 | 650 | 750 | 50% |

As can be seen from Comparative Embodiments 1-1 to 1-3 and Embodiments 1-1 to 1-9 in Table 1, the spacing T1 between the protrusion region 310 and the edge of the electrode plate 300 satisfies: 0.5 mm ≤ T1 ≤ 30 mm, so that the degree of flatness at the edge of the electrode plate 300 is high, the normal-temperature and high-temperature cycle performance of the lithium-ion battery is improved, and the high-rate charge-and-discharge performance is greatly enhanced. In addition, the yield rate of winding in actual production is also improved. When T1 is less than the lower limit of 0.5 mm, because the first protruding portion 311 is excessively close to the edge of the electrode plate 300, when the first protruding portion 311 is formed by rolling on the electrode plate 300, wavy crimping is prone to occur at the edge of the electrode plate 300 due to rolling stress. Consequently, the degree of flatness is low, and the cycle performance of the lithium-ion battery is reduced. When T1 is greater than the upper limit of 30 mm, the area of the protrusion region 310 is excessively small, and the effective supporting area of the first protruding portions 311 disposed in the protrusion region 310 is insufficient, thereby resulting in insufficient electrolyte channels of the lithium-ion battery. Consequently, the effect on improving the high-temperature and normal-temperature cycle performance becomes worse, the high-current charge-and-discharge performance is unable to be improved, and an adverse effect is also brought to the yield rate of winding.

As can be seen from Embodiments 1-10 to 1-15 in Table 1, the spacing T21 between the tab 100 and the protrusion region 310 falls within the range of 1 mm to 30 mm, so that the normal-temperature and high-temperature cycle performance of the lithium-ion battery is improved, and the high-rate charge-and-discharge performance is greatly enhanced. In addition, the yield rate of winding in actual production is also improved.

As can be seen from Embodiments 1-16 to 1-21 in Table 1, the spacing T22 between the protection adhesive and the protrusion region 310 falls within the range of 0.5 mm to 30 mm, so that the normal-temperature and high-temperature cycle performance of the lithium-ion battery is improved, and the high-rate charge-and-discharge performance is greatly enhanced. In addition, the yield rate of winding in actual production is also improved.

In Table 2, in Comparative Embodiments 2-1 to 2-2, Embodiment 1-4, and Embodiments 2-1 to 2-12, the electrode plate 300 shown in FIG. 4 is used as a positive electrode plate 300. Embodiments 2-1 to 2-12 differ from Embodiment 1-4 in that the dimension W1 of the tab region in the width direction Y of the electrode plate as well as the dimension of the tab region in the length direction X of the electrode plate are different, and the spacing T21 between the tab and the protrusion region is equal to the spacing T22 between the protection adhesive and the protrusion region, both being 4 mm. The parameters and performance test results of the lithium-ion batteries in Comparative Embodiments 2-1 to 2-2, Embodiment 1-4, and Embodiments 2-1 to 2-12 are shown in Table 2.

**Table 2 (To be continued)**

| Item | Dimension of tab region in width direction of electrode plate W1 (mm) | Dimension of tab region in length direction of electrode plate W3 (mm) | Dimension of head clearance region A (mm) | Dimension of tail clearance region D (mm) |
|---|---|---|---|---|
| Embodiment 1-4 | 2 | 30 | 100 | 400 |
| Embodiment 2-1 | 20 | 30 | 100 | 400 |
| Embodiment 2-2 | 30 | 30 | 100 | 400 |
| Embodiment 2-3 | 40 | 30 | 100 | 400 |
| Embodiment 2-4 | 30 | 8 | 100 | 400 |
| Embodiment 2-5 | 30 | 15 | 100 | 400 |
| Embodiment 2-6 | 30 | 25 | 100 | 400 |
| Embodiment 2-7 | 30 | 40 | 100 | 400 |
| Embodiment 2-8 | 35 | 30 | 100 | 400 |
| Embodiment 2-9 | 1 | 30 | 100 | 400 |
| Embodiment 2-10 | 30 | 55 | 100 | 400 |
| Embodiment 2-11 | 45 | 1 | 100 | 400 |
| Embodiment 2-12 | / | / | 100 | 400 |
| Comparative Embodiment 2-1 | / | / | / | / |
| Comparative Embodiment 2-2 | 30 | 30 | / | / |

**Table 2 (Continued)**

| Item | Spacing between protrusion region and edge of electrode plate T1 (mm) | Number of cycles accumulated until cycle capacity retention rate ≤ 80% cycled at 2C at 25 °C | Number of cycles accumulated until cycle capacity retention rate ≤ 80% cycled at 2C at 45 °C | Yield rate of winding |
|---|---|---|---|---|
| Embodiment 1-4 | 10 | 1100 | 1050 | 96% |
| Embodiment 2-1 | 10 | 1180 | 1170 | 99% |
| Embodiment 2-2 | 10 | 1175 | 1175 | 99% |
| Embodiment 2-3 | 10 | 1170 | 1180 | 99% |
| Embodiment 2-4 | 10 | 1180 | 1180 | 99% |
| Embodiment 2-5 | 10 | 1170 | 1185 | 99% |
| Embodiment 2-6 | 10 | 1175 | 1170 | 99% |
| Embodiment 2-7 | 10 | 1155 | 1150 | 99% |
| Embodiment 2-8 | 10 | 1160 | 1155 | 99% |
| Embodiment 2-9 | 10 | 1150 | 1145 | 99% |
| Embodiment 2-10 | 10 | 1155 | 1150 | 99% |
| Embodiment 2-11 | 10 | 1150 | 1155 | 97% |
| Embodiment 2-12 | 10 | 1160 | 1150 | 99% |
| Comparative Embodiment 2-1 | / | 650 | 600 | 50% |
| Comparative Embodiment 2-2 | 10 | 750 | 750 | 70% |

As can be seen from Comparative Embodiments 2-1 to 2-2, Embodiment 1-4, and Embodiments 2-1 to 2-7 in Table 2, in some embodiments of this application, the electrode plate 300 is provided with a protrusion region 310 and an end clearance region 330, thereby effectively improving the normal-temperature and high-temperature cycle performance of the lithium-ion battery.

As can be seen from Embodiment 2-12 and Comparative Embodiments 1-1 and 1-2, when the electrode plate 300 includes a head clearance region 331 and a tail clearance region 332, almost no effect is produced on the yield rate of winding. On the contrary, when the head clearance region 331 and the tail clearance region 332 are cancelled, the yield rate of winding is greatly reduced.

As can be seen from Comparative Embodiment 2-1 to Embodiment 2-2, Embodiment 1-4, and Embodiments 2-1 to 2-12, the electrode plate 300 is provided with a protrusion region 310, a tab region 320, and an end clearance region 330, thereby also improving the normal-temperature and high-temperature cycle performance of the lithium-ion battery. This is due to a combined effect of the tab region 320 and the end clearance region 330 disposed reasonably. The dimension W1 of the tab region 320 in the width direction Y of the electrode plate 300 is set appropriately, so that the protrusion region 310 can avoid the positions of the tab and the infiltrated adhesive tape, and prevent the tab and the adhesive tape from damaging and deteriorating the interface. The dimension W3 of the tab region 320 in the length direction X of the electrode plate 300 is set reasonably, so that the area proportion of the protrusion region 310 is large enough and improves the cycle performance of the lithium-ion battery more significantly. Both W1 and W3 are set reasonably, so that the protrusion region 310 can avoid the positions of the tab and the infiltrated adhesive tape, and at the same time, the area proportion is large enough, and the effect on improving the high-temperature and normal-temperature cycle performance is the optimal.

As can be seen from Embodiment 1-4 and Embodiments 2-1 to 2-3, Embodiments 2-9 to 2-12, and Comparative Embodiments 2-1 to 2-2, the dimension W1 of the tab region 320 in the length direction X of the electrode plate 300 satisfies: 2 mm ≤ W1 ≤ 40 mm, so that the cycle performance of the lithium-ion battery is improved, and the improvement in the 2C high-rate charge-and-discharge cycle performance is more significant. A main reason is that the reasonable setting of W1 can improve the interface, avoid the tab, and reduce damage to the tab. When W1 is greater than the upper limit of 40 mm, although the tab is avoided, the area of the protrusion region is reduced due to an excessive avoidance spacing, thereby weakening the effect of improving the inferior interface, and finally resulting in a decline in the cycle performance.

As can be seen from Embodiments 2-4 to 2-7, Embodiments 2-10 to 2-12, and Comparative Embodiments 2-1 to 2-2, the dimension W3 of the tab region 320 in the length direction X of the electrode plate 300 satisfies: 10 mm ≤ W3 ≤ 50 mm, so that the normal-temperature and high-temperature cycle performance of the lithium-ion battery is improved, and the effect of improvement in the 2C high-rate charge-and-discharge cycle performance is more significant. When W3 is greater than the upper limit of 50 mm, the distance between the protrusion region and the tab region is excessively large, thereby resulting in a weakened improvement effect on the regions on both sides of the tab, and leading to a decline in cycle performance.

In Table 3, in Embodiments 3-1 to 3-12, the electrode plate 300 shown in FIG. 4 is used as a positive electrode plate 300. Embodiments 3-1 to 3-12 differ from Embodiment 1-2 in the dimension A of the head clearance region and the dimension D of the tail clearance region of the lithium-ion battery. The parameters and performance test results of the lithium-ion batteries in Embodiments 3-1 to 3-12 are shown in Table 3.

**Table 3**

| Item | Dimension of head clearance region A (mm) | Dimension of tail clearance region D (mm) | Number of cycles accumulated until cycle capacity retention rate ≤ 80% cycled at 5C at 25 °C | Number of cycles accumulated until cycle capacity retention rate ≤ 80% cycled at 5C at 45 °C | Yield rate of winding |
|---|---|---|---|---|---|
| Embodiment 1-2 | 100 | 400 | 950 | 900 | 97% |
| Embodiment 3-1 | 30 | 400 | 900 | 850 | 95% |
| Embodiment 3-2 | 60 | 400 | 930 | 880 | 96% |
| Embodiment 3-3 | 500 | 400 | 1150 | 1160 | 99% |
| Embodiment 3-4 | 1000 | 400 | 1130 | 1110 | 97% |
| Embodiment 3-5 | 100 | 30 | 1150 | 1180 | 94% |
| Embodiment 3-6 | 100 | 100 | 1155 | 1200 | 99% |
| Embodiment 3-7 | 100 | 500 | 1140 | 1260 | 99% |
| Embodiment 3-8 | 100 | 1000 | 1100 | 1130 | 95% |
| Embodiment 3-9 | 25 | 500 | 1050 | 1050 | 90% |
| Embodiment 3-10 | 1100 | 500 | 1000 | 1020 | 92% |
| Embodiment 3-11 | 1000 | 10 | 1050 | 1030 | 91% |
| Embodiment 3-12 | 1000 | 1100 | 1020 | 1080 | 96% |

As can be seen from Embodiments 3-1 to 3-4 and Embodiments 3-9 to 3-10 in Table 3, the dimension A of the head clearance region 331 satisfies: 30 mm ≤ A ≤ 1000 mm, thereby producing little effect on the yield rate of winding, and improving the normal-temperature cycle performance and high-temperature cycle performance of the battery cycled at a high-rate current density. When A is less than the lower limit of 30 mm, the feeding accuracy during winding is reduced. When A is greater than the upper limit of 1000 mm, the clearance region is excessively large, the area proportion of the protrusion region is reduced, and the effect of improving the cycle performance is reduced. Preferably, A satisfies: 60 mm ≤ D ≤ 500 mm.

As can be seen from Embodiments 3-5 to 3-8 and Embodiments 3-11 to 3-12 in Table 3, the dimension D of the tail clearance region 332 satisfies: 30 mm ≤ D ≤ 1000 mm, thereby producing a relatively small effect on the yield rate of winding of the lithium-ion battery, and improving the normal-temperature cycle performance and high-temperature cycle performance of the battery cycled at a 5C current density. When D is lower than the lower limit of 30 mm, the winding termination accuracy is reduced, thereby resulting in an insufficient yield rate of winding. When D is higher than the upper limit of 1000 mm, the cycle performance of the lithium-ion battery decreases. This is because the excessively large value of D leads to an increase in the protrusions in the interface region of the original straight part at the tail section, and results in an excessive interlayer spacing of the original straight part. Consequently, the lithium ion transmission path is prolonged, the efficiency is reduced, the intercalated lithium is insufficient, and ultimately the cycle performance is impaired.

In Table 4, in Embodiments 4-1 to 4-8, the electrode 300 shown in FIG. 7 is used as a positive electrode plate 300. W6 is the dimension of the protrusion region in each turn of the electrode plate. The dimensions of the protrusion regions in all turns of the electrode plate are equal. The parameters and performance test results of the lithium-ion batteries in Embodiments 4-1 to 4-8 and Embodiment 1-4 are shown in Table 4. The dimension A of the head clearance region, the dimension D of the tail clearance region, and the spacing T1 between the protrusion region and the edge of the electrode plate in Embodiments 4-1 to 4-8 are the same as those in Embodiment 1-4.

**Table 4**

| Item | Dimension of protrusion region W6 (mm) | Spacing between protrusion region and edge of electrode plate T1 (mm) | Spacing between tab and protrusion region T21 (mm) | Number of cycles accumulated until cycle capacity retention rate ≤ 80% cycled at 5C at 25 °C | Number of cycles accumulated until cycle capacity retention rate ≤ 80% cycled at 5C at 45 °C | Infiltration improvement effect | Electrolyte retention amount |
|---|---|---|---|---|---|---|---|
| Embodiment 1-4 | 0.5 | 3 | 4 | 1100 | 1050 | Unchanged | 0.20 |
| Embodiment 4-1 | 1 | 3 | 4 | 1150 | 1100 | Significant | 0.20 |
| Embodiment 4-2 | 2 | 3 | 4 | 1160 | 1110 | Significant | 0.20 |
| Embodiment 4-3 | 4 | 3 | 4 | 1250 | 1140 | Significant | 0.25 |
| Embodiment 4-4 | 8 | 3 | 4 | 1240 | 1180 | Significant | 0.25 |
| Embodiment 4-5 | 15 | 3 | 4 | 1280 | 1170 | Significant | 0.25 |
| Embodiment 4-6 | 50 | 3 | 4 | 1150 | 1160 | Significant | 0.25 |
| Embodiment 4-7 | 100 | 3 | 4 | 1130 | 1150 | Significant | 0.20 |
| Embodiment 4-8 | 120 | 3 | 4 | 1100 | 1080 | Moderate | 0.15 |

In Embodiments 5-1 to 5-9 in Table 5, the electrode plate 300 shown in FIG. 8 is used as a positive electrode plate 300. The dimension A of the head clearance region, the dimension D of the tail clearance region, and the spacing T1 between the protrusion region and the edge of the electrode plate in Embodiments 5-1 to 5-9 are the same as those in Embodiment 1-4. The parameters and performance test results of the lithium-ion batteries in Comparative Embodiment 5-1 and Embodiments 5-1 to 5-9 are shown in Table 5. In FIG. 8, the dimensions W6 of the protrusion regions gradually increase from inner turns to outer turns. W6 in Table 5 is the dimension of the protrusion region in the outermost turn of the electrode. The dimension of the protrusion region in the ith turn from the outside to the inside, denoted as W6(i), is calculated according to the following formula: $W 6 \left(i\right) = W 6 - \left(i\times t\times π\right)$

In the formula above, i is the number of layers of the electrode assembly from the outside to the inside; and t is the thickness of the electrode plate, and t = 0.12 mm.

When W6(i) is less than 0, it means that no protrusion is disposed on this layer.

**Table 5**

| Item | Dimension of protrusion region W6 (mm) | Spacing between protrusion region and edge of electrode plate T1 (mm) | Spacing between tab and protrusion region T21 (mm) | Number of cycles accumulated until cycle capacity retention rate ≤ 80% cycled at 5C at 25 °C | Number of cycles accumulated until cycle capacity retention rate ≤ 80% cycled at 5C at 45 °C | Infiltration improvement effect | Electrolyte retention amount |
|---|---|---|---|---|---|---|---|
| Embodiment 1-5 | 0.5 | 5 | 4 | 1100 | 1100 | Significant | 0.15 |
| Embodiment 5-1 | 1 | 5 | 4 | 1230 | 1150 | Significant | 0.17 |
| Embodiment 5-2 | 2 | 5 | 4 | 1250 | 1160 | Significant | 0.20 |
| Embodiment 5-3 | 4 | 5 | 4 | 1260 | 1165 | Significant | 0.20 |
| Embodiment 5-4 | 8 | 5 | 4 | 1275 | 1210 | Significant | 0.25 |
| Embodiment 5-5 | 15 | 5 | 4 | 1255 | 1190 | Significant | 0.25 |
| Embodiment 5-6 | 50 | 5 | 4 | 1240 | 1180 | Significant | 0.25 |
| Embodiment 5-7 | 100 | 5 | 4 | 1250 | 1170 | Significant | 0.20 |
| Embodiment 5-8 | 110 | 5 | 4 | 1130 | 1130 | Moderate | 0.10 |

As can be seen from the embodiments in Table 4 and Table 5, when the protrusion region 310 is disposed corresponding to the corner part 22, and the dimensions of all the protrusion regions 310 of the electrode plate 300 in the length direction X of the electrode plate 300 are equal or approximately equal, the dimension W6 of the protrusion region 310 in the length direction X of the electrode plate 300 satisfies: 0.5 mm ≤ W6 ≤ 100 m, and both the electrolyte retention amount and electrolyte infiltration effect of the lithium-ion battery are improved.

When W6 is excessively small, the dimension of the protrusion region 310 in the length direction X of the electrode plate 300 is excessively small, the area proportion of the protrusion region 310 is greatly reduced, no effective support is provided against the squeezing on the battery cell, and the electrolyte channels are blocked, thereby resulting in a decline in cycle performance.

When W6 is greater than the upper limit of 100 mm, the dimension of the protrusion region 310 in the length direction X of the electrode plate 300 is excessively large, and the protrusion region almost covers all regions of the electrode plate. One consequence is that the clearance not enough to avoid the positions of the tab and the infiltrated adhesive tape, thereby deteriorating the interface at the positions of the tab and the infiltrated adhesive tape. The interface deterioration eventually spreads to the entire electrode plate, and results in a significantly weaker effect of improving the cycle performance. The weakening of the improvement effect is more evident in the test of a high-rate battery cell test.

In the accompanying drawings of this application, the same or similar reference numerals represent the same or similar components. In the description of this application, understandably, a direction or positional relationship indicated by the terms such as "up", "down", "left", and "right" is a direction or positional relationship based on the illustration in the drawings, and is merely intended for ease or simplicity of describing this application, but not intended to indicate or imply that the indicated device or component is necessarily located in the specified position or constructed or operated in the specified direction or position. Therefore, the terms depicting the positional relationship in the drawings are merely for illustrative purposes, but not to be understood as any limitation on this patent. A person of ordinary skill in the art may understand the specific meanings of such terms depending on specific situations.

Described above are merely preferred embodiments of this application that are not intended to limit this application. Any modifications, equivalent substitutions, and improvements made without departing from the concept and principles of this application still fall within the protection scope of this application.

## Claims

1. An electrode plate **characterized in that** the electrode plate comprises a current collector and an active material layer disposed on a surface of the current collector; a surface, facing away from the current collector, of the active material layer comprises atab region a protrusion region and an end clearance region the electrode plate comprises a plurality of first protruding portions distributed in the protrusion region the plurality of first protruding portions protrude toward a same side of the electrode plate in a thickness direction of the electrode plate the end clearance region is provided at an end of the protrusion region in a length direction of the electrode plate and extends to an edge of the electrode plate and the tab region extends to the edge of the electrode plate in a width direction of the electrode plate and the tab region is configured to allow arrangement of a tab assembly; and
in the width direction of the electrode plate a shortest distance between the protrusion region and an edge of the active material layer is T1, and T1 satisfies: 0.5 mm ≤ T1 ≤ 30 mm; and a spacing between the tab assembly and the protrusion region is T2, and T2 satisfies: 0.5 mm ≤ T2 ≤ 30 mm.

2. The electrode plate according to claim 1, **characterized in that** the end clearance region comprises a head clearance region and a tail clearance region in the length direction of the electrode plate the head clearance region is provided at one end of the protrusion region and the tail clearance region is provided at another end of the protrusion region and the electrode plate is configured to be wound together with a separator from the head clearance region along the length direction of the electrode plate to form a flat electrode body

3. The electrode plate according to claim 2, **characterized in that**, in the length direction of the electrode plate a dimension of the head clearance region is A, and a dimension of the tail clearance region is D, A satisfies: 30 mm ≤ A ≤ 1000 mm, and D satisfies: 30 mm ≤ D ≤ 1000 mm.

4. The electrode plate according to claim 3, **characterized in that**, in the length direction of the electrode plate A satisfies: 60 mm ≤ A ≤ 500 mm, and D satisfies: 100 mm ≤ D ≤ 500 mm.

5. The electrode plate according to claim 1, **characterized in that** T1 satisfies: 1 mm ≤ T1 ≤ 30 mm

6. The electrode plate according to claim 1, **characterized in that** T1 satisfies: 3 mm ≤ T1 ≤ 30 mm

7. The electrode plate according to claim 1, **characterized in that** T1 satisfies: 3 mm ≤ T1 ≤ 20 mm.

8. The electrode plate according to claim 1, **characterized in that**, in the width direction of the electrode plate the surface, facing away from the current collector, of the active material layer comprises a first region connected to one side of the protrusion region and a second region connected to another side of the protrusion region; the first region extends to the edge of the active material layer along a direction facing away from the second region and the second region extends to the edge of the active material layer along a direction facing away from the first region; and
T11 is defined as a width of the first region in the width direction of the electrode plate, T12 is defined as a width of the second region in the width direction of the electrode plate, a difference between T11 and T12 is ΔT1, ΔT1 = |T11 - T12|, and ΔT1 satisfies: 0 mm ≤ ΔT1 ≤ 29.5 mm.

9. The electrode plateaccording to claim 1, **characterized in that** the tab assembly comprises a tab; and/or the tab assembly comprises a protection adhesive.

10. The electrode plate according to claim 1, **characterized in that** a number of the tab regions is one, and the tab region extends along the length direction of the electrode plate to connect to the end clearance region

11. The electrode plate according to claim 1, **characterized in that**, in the width direction of the electrode plate the surface, facing away from the current collector, of the active material layer comprises a first region connected to one side of the protrusion region, and the first region is located on one side, facing away from the tab region, of the protrusion region and extends to the edge of the electrode plate and
a width of the tab region in the width directionof the electrode plateis W1, and W1 satisfies: 2 mm ≤ W1 ≤ 40 mm.

12. The electrode plate according to claim 1, **characterized in that** both a number of the tab regions and a number of the protrusion regions are plural; in the length direction of the electrode plate, one tab region is provided between two adjacent protrusion regions and each tab region runs through the electrode plate along the width direction of the electrode plate

13. The electrode plate according to claim 1, **characterized in that** the protrusion region comprises at least one clearance opening region, each clearance opening region extends along the width direction of the electrode plate to the edge of the electrode plate to form the tab region, and a plurality of the clearance opening regions extend toward a same edge of the electrode plate in the width direction of the electrode plate.

14. The electrode plate according to claim 12 or 13, **characterized in that** a dimension of the tab region in the length direction of the electrode plate is W3, and W3 satisfies: 10 mm ≤ W3 ≤ 50 mm.

15. The electrode plate according to claim 1, **characterized in that** the electrode plate is configured to be wound together with a separator for a plurality of turns along the length direction of the electrode plate to form an electrode body each turn of the electrode plate comprises a straight part and corner parts disposed at two ends of the straight portion respectively, and the tab region is disposed in the straight portion; and in the length direction of the electrode plate a dimension of each of the corner portions is W5, and a dimension of the protrusion region is W6;
the protrusion region is provided at the corner portion, wherein W6 = W5; or,
the protrusion region is provided at the corner part and extends to the straight part and the two protrusion regions of a same turn of the electrode plate are spaced apart, wherein W6 > W5.

16. The electrode plate according to claim 15, **characterized in that**
W5 satisfies: 0.5 mm ≤ W5 ≤ 20 mm; and/or
W6 satisfies: 0.5 mm ≤ W6 ≤ 100 mm.

17. The electrode plate according to claim 15, **characterized in that**
dimensions W6 of all the protrusion regions in the length direction of the electrode plate are equal; or
from an inner turn to an outer turn of the electrode body, the dimension W6 of the protrusion region in the length direction of the electrode plate gradually increases.

18. The electrode plate according to claim 1, **characterized in that** the electrode plate is configured to be wound together with a separator for a plurality of turns along the length direction of the electrode plate to form an electrode body; each turn of the electrode plate comprises a straight part and corner parts disposed at two ends of the straight portion respectively, and the tab region is disposed in the straight portion;
a height of the first protruding portion disposed at the corner part is h1, and h1 satisfies: 55 µm ≤ h1 ≤ 70 µm; and
a height of the first protruding portion disposed at the straight part is h2, and h2 satisfies: 10 µm ≤ h2 ≤ 18 µm.

19. The electrode plate according to claim 1, **characterized in that** the electrode plate is configured to be wound together with a separator for a plurality of turns along the length direction of the electrode plate to form an electrode body; and the plurality of first protruding portions on each turn of the electrode plate protrude toward a winding center of the electrode body in the thickness direction of the electrode plate

20. The electrode plate according to claim 1, **characterized in that**
outer contours of the first protruding portions are circular, elliptical, or regular polygonal; or
outer contour dimensions of the first protruding portions are equal; or
in the width direction of the electrode plate outer contour dimensions of the first protruding portions gradually decrease from a central region to an edge region of the protrusion region or
in the length direction of the electrode plate, outer contour dimensions of the first protruding portions gradually decrease from a central region to an edge region of the protrusion region

21. An electrode assembly, **characterized in that** the electrode assembly comprises a plurality of tab assemblies the electrode plate according to any one of claims 1 to 20, and a separator disposed between two electrode plates, and the separator and the two electrode plates are wound along the length direction of the electrode plate to form a flat electrode body

22. The electrode assembly according to claim 21, **characterized in that** the tab assembly comprises a tab and the tab is provided in the tab region of the electrode plate the tab comprises a connecting section connected to the electrode plate and a mating section extending beyond the edge of the electrode plate and a plurality of second protruding portions are disposed protrusively on a surface, facing away from the electrode plate of the connecting section.

23. A battery, **characterized in that** the battery comprises:
a shell; and
the electrode assembly according to claim 22, wherein the electrode assembly is disposed in an inner space of the shell.
